# EUROPÄISCHE PATENTSCHRIFT

(11) **EP 2 675 929 B1**
(45) Veröffentlichungstag und Bekanntmachung des Hinweises auf die Patenterteilung: **27.12.2017**
(21) Anmeldenummer: 12709786.3
(22) Anmeldetag: 16.02.2012
(51) Int. Cl.: C22B 1/00

(54) **VERFAHREN ZUM ABLÖSEN VON BESCHICHTUNGEN VON SCHROTTEN**
METHOD FOR DETACHING COATINGS FROM SCRAP
PROCÉDÉ PERMETTANT DE DÉTACHER DES REVÊTEMENTS DE DÉBRIS

(30) Priorität: 17.02.2011 DE 102011011532
(43) Veröffentlichungstag der Anmeldung: 25.12.2013
(73) Patentinhaber: PROASSORT GmbH, 58791 Werdohl (DE)
(72) Erfinder: PILLKAHN, Hans-Bernd, 58791 Werdohl (DE); KÄMPER, Thomas, 30938 Burgwedel (DE); VERVERS, Holger, 44581 Castrop-Rauxel (DE)
(74) Vertreter: Schöneborn, Holger
(86) Internationale Anmeldenummer: PCT/EP2012/000683
(87) Internationale Veröffentlichungsnummer: WO 2012/110239

(56) Entgegenhaltungen:
- EP-A1- 0 211 239
- DE-B3-102004 028 496
- JP-A- 4 280 933
- Gock et al: "Ein neues Verfahren zur saueren Entzinkung von Stahlschrotten", AMS-Online , March 2010 (2010-03), Retrieved from the Internet: URL:http://issuu.com/amsonline/docs/ams_20 1003 [retrieved on 2014-08-19]

## Beschreibung

Die Erfindung betrifft ein Verfahren zum Ablösen von Beschichtungen von Schrotten, wobei der Schrott beim Ablösen der Beschichtung in einer Förderrinne eines Schwingförderers entlang einer Förderrichtung vom Eintrittsende zum Austrittsende der Förderrinne bewegt wird.

Schrotte, insbesondere Stahlschrotte, sind häufig mit einer Beschichtung versehen, die dem Schutz vor Korrosion oder besonderen physikalischen und optischen Oberflächeneffekten dienen. Die Produkte, aus denen nach Gebrauch die Schrotte anfallen, können beispielsweise elektrolytisch, im Schmelztauchverfahren oder durch Plattieren mit einer Schicht aus anderen Metallen überzogen und/oder mit organischen Verbindungen behandelt, beispielsweise lackiert oder folienkaschiert werden. In besonders großem Umfang wird Stahl als Korrosionsschutz mit einer Zinkschicht versehen, so dass erhebliche Mengen an verzinkten Stahlschrotten anfallen. Einziger wirtschaftlicher Entsorgungs- und Recyclingweg für derartige Hybride war bislang das Wiedereinschmelzen der Schrotte im Elektrolichtbogenofen oder in Gießereiöfen, hier bevorzugt in Kupolöfen. Diese Verfahren sind jedoch sowohl ökonomisch als auch in ökologischer Hinsicht nicht optimal, da beispielsweise beim Einschmelzen von verzinktem Stahlschrott zinkhaltige Stäube in großen Mengen anfallen. Bei der Deponierung dieser Stäube gehen erhebliche Mengen an wertvollem Metall verloren. Es sind zwar Verfahren bekannt, diese Stäube pyrometallurgisch aufzubereiten, diese sind jedoch auch aufgrund hoher Metallverluste vergleichsweise unwirtschaftlich und in ökologischer Hinsicht bedenklich. Da es sich bei Zink zudem um einen wertvollen Rohstoff handelt, ist die vorlaufende, d. h. vor dem Einschmelzen erfolgende Rückgewinnung des Zinks aus dem verzinkten Stahlschrott auch in wirtschaftlicher Hinsicht sinnvoll.

Aus dem Stand der Technik sind bereits Verfahren zur Entzinkung von Stahlschrott in alkalischer Lösung bekannt. Diese Verfahren haben jedoch den Nachteil, dass die Entzinkung eine deutlich erhöhte Temperatur von meist mindestens 85°C über einen verhältnismäßig langen Zeitraum erfordert. Neben der basischen Entzinkung ist auch die saure Entzinkung von Stahlschrotten bekannt, die innerhalb kürzerer Zeit und bei niedrigeren Temperaturen abläuft. In der Vergangenheit hat sich die saure Entzinkung jedoch nicht durchsetzen können, da bei der Säurebehandlung stets auch erhebliche Mengen Eisen mit in Lösung gingen. Die deutsche Patentanmeldung DE 10 2008 016 323 A1 schlägt daher vor, bei der Entzinkung von Stahlschrott in saurer Lösung eine mit Zinkionen vorbeladene Lösung zu verwenden. Es hat sich nämlich gezeigt, dass die Gegenwart von Zinkionen in der sauren Lösung zu einer deutlichen Beschleunigung der Zinkauflösung führt, so dass die Kontaktzeit mit dem zu entzinkenden Stahlschrott so kurz gehalten werden kann, dass die Eisenauflösung praktisch gerade erst begonnen hat. Im Vergleich dazu führt die Verwendung einer reinen Säure bei gleichen Reaktionszeiten nur zu einer unvollständigen Entzinkung. Die daher zur Erreichung einer annähernd vollständigen Entzinkung notwendige Verlängerung der Reaktionszeiten führt jedoch zu einer deutlichen Erhöhung des unerwünschten Eiseneintrags. Ebenso ist aus der DE 10 2008 048 493 A1 bekannt, dass die Eisenauflösung inhibiert wird, wenn die Umsetzung mit der sauren Lösung in Gegenwart eines Öls erfolgt.

Bei der Durchführung einer solchen Entzinkung ist es daher von großer Bedeutung, die Reaktionszeiten genau zu kontrollieren, damit der unerwünschte Eiseneintrag in vertretbarem Rahmen bleibt. Dies kann diskontinuierlich im Batch-Verfahren erfolgen, vorteilhafter ist jedoch die Durchführung eines kontinuierlichen Prozesses, da ein solcher grundsätzlich mit höherem Durchsatz gefahren werden kann.

Aus der japanischen Druckschrift JP 4 280933 A ist ein Verfahren zur Entzinkung von Stahlschrotten bekannt, bei dem eine Entzinkung mit Hilfe von Schwefelsäure in einem beweglichen Behälter innerhalb eines stationären Behälters durchgeführt wird. Dabei wird der bewegliche Behälter in vertikaler Richtung bewegt. Nach erfolgter Ablösung der Zinkschicht wird der Stahlschrott über einen Zwischenbehälter und einen Waschbehälter einem Ort zum Trocknen zugeführt.

Gock et al.: "Ein neues Verfahren zur sauren Entzinkung von Stahlschrotten", AMS-Online 03/2010, S. 70 - 86 beschreiben die Entzinkung von Stahlblechen, wobei die zur Ablösung der Zinkschicht eingesetzte Säure über Düsensysteme mit den Blechen in Kontakt gebracht wird.

Ausgehend vom vorbeschriebenen Stand der Technik stellt sich die Aufgabe, ein Verfahren zum Ablösen von Beschichtungen von Schrotten, bei dem der Schrott mit einer Flüssigkeit in Kontakt gebracht wird, zur Verfügung zu stellen, welches kontinuierlich und effektiv betreibbar ist.

Diese Aufgabe wird erfindungsgemäß gelöst durch ein Verfahren nach Anspruch 1.

Die Erfindung beruht in erster Linie darauf, einen Schwingförderer mit einer Förderrinne, auch als Schwingrinne bekannt, einzusetzen, um hierin die Ablösung der Beschichtung durchzuführen. Bei derartigen Schwingförderern handelt es sich um mechanische Fördereinrichtungen für Schüttgüter unterschiedlicher Art, bei denen das zu transportierende Medium mittels Schwingungen bewegt wird. Ein typischer Schwingförderer bewegt sich zum Transport schräg nach oben in Förderrichtung und zurück, d. h. die Bewegung umfasst eine vertikale Komponente sowie eine horizontale Komponente in Förderrichtung. Auf diese Weise wird das Fördergut nach oben geworfen und trifft, nachdem sich der Schwingförderer selbst zurückbewegt hat, in einem in Förderrichtung näher zum Austrittsende der Förderrinne liegenden Bereich wieder auf. Das am Eintrittsende auf die Förderrinne gebrachte Fördergut "ruckelt" somit nach und nach in Richtung Austrittsende, indem es durch die Schwingungen stets etwas nach oben und in Richtung Austrittsende geworfen wird. Pro Schwingung wird das Fördergut ungefähr um den waagerechten Vektor der Schwingungsamplitude weiterbewegt. Bei einer beispielhaften Schwingungsfrequenz von 10-16 Hz und einer Weiterbewegung des Förderguts pro Schwingung im Bereich von 5-10 mm ergibt sich somit eine Transportgeschwindigkeit von 3 m/min und mehr.

Der Einsatz von Schwingförderern im Rahmen der Behandlung von schüttfähigem Gut ist zwar auch aus der EP 0 211 239 A1 bekannt, hier wird jedoch das schüttfähige Gut mit Hilfe einer wendelförmig verlaufenden Schwingrinne durch ein Behandlungsbad gefördert. Eine Besprühung mit einer Flüssigkeit zur Ablösung einer Beschichtung findet nicht statt.

Unter einem Schwingförderer gemäß der Erfindung wird auch eine Schüttelrutsche verstanden. Im Gegensatz zur zuvor beschriebenen Ausführungsform eines Schwingförderers bewegt sich die Schüttelrutsche lediglich hin- und her, d. h. nur in der Horizontalen, aber ohne Vertikalkomponente. Es findet somit kein "Wurf" des Förderguts statt, vielmehr rutscht dieses mit jeder Schwingung ein Stück weiter in Förderrichtung. Bei jeder Schwingung bewegt sich die Förderrinne zunächst in Förderrichtung, bevor sie am Ende dieser Bewegung ruckartig in die entgegengesetzte Richtung beschleunigt wird. Aufgrund der Trägheit der Schrottteile rutschen diese jeweils noch ein Stück weiter in Förderrichtung. Da sich der Vorgang mit hoher Frequenz ständig wiederholt, resultiert insgesamt eine deutliche Bewegung in Förderrichtung. Moderne Förderrinnen erlauben es zum Teil, die genaue Art der Schwingung einzustellen, so dass zwischen einer Schwingung mit oder ohne Vertikalanteil gewählt werden kann und Frequenz, Impuls, Winkel etc. eingestellt werden können.

Die Förderrinne eines Schwingförderers setzt sich im Wesentlichen zusammen aus einem Boden und seitlichen, in Längsrichtung verlaufenden Begrenzungen. Im Übrigen wird das Fördergut an einem Ende (dem Eintrittsende) auf die Förderrinne aufgebracht und zum anderen Ende (dem Austrittsende) in Förderrichtung weiterbewegt. Soweit hier von der Längsrichtung des Schwingförderers die Rede ist, ist hiermit die Förderrichtung gemeint, der Ausdruck "seitlich" bezieht sich somit auf die Richtung orthogonal zur Längsrichtung.

Schwingförderer sind robust und arbeiten weitgehend wartungsfrei. Im Gegensatz zu anderen Fördereinrichtungen sind Stauungen relativ selten, da sich Schwingförderer meist selber wieder "freirütteln".

Mit der Erfindung sind verschiedene Vorteile verbunden. So lässt sich das Verfahren kontinuierlich betreiben, da der zu behandelnde Schrott gleichzeitig weiterbewegt und mit der Flüssigkeit umgesetzt wird. Entsprechend ist auch die Kontaktzeit zwischen Schrott und Flüssigkeit weitgehend vorbestimmt, da der Schrott für seine Bewegung vom Eintrittsende zum Austrittsende je nach Länge des Schwingförderers, Schwingfrequenz und Impuls pro Schwingung eine bestimmte Zeit benötigt. Die Kontrolle der Kontaktzeit von Schrott und Flüssigkeit erlaubt es beispielsweise bei der Entzinkung von Stahlschrotten mithilfe von Schwefelsäure, den unerwünschten Eiseneintrag in akzeptablen Grenzen zu halten. Gleichzeitig wird durch die Verwendung eines Schwingförderers eine kontinuierliche Relativbewegung zwischen Schrott und Flüssigkeit herbeigeführt, welche ebenfalls die Ablösung der Beschichtung fördert. Darüber hinaus kann die Schütthöhe des Schrotts erhöht werden, weil bei Verwendung eines Schwingförderers auch von anderen Schrottteilen verdeckter Schrott aufgrund der Bewegungen mit der Flüssigkeit in Berührung kommt. Bevorzugt sind Schwingungen mit Vertikalanteil, d. h. in Förderrichtung sowie nach oben und zurück, da bei den auf diese Weise herbeigeführten Würfen der Schrottteile eine Veränderung der Lage und besonders starke Relativbewegungen erfolgen. Darüber hinaus wird auch die Förderrinne selbst geschont, weil durch die ständigen Wurfbewegungen die Gleitreibung gering gehalten wird.

Die Erfindung betrifft insbesondere die Ablösung von Beschichtungen von Stahlschrotten. Wie eingangs ausgeführt, hat bei Stahlschrotten die Entfernung von als Korrosionsschutz dienenden Zinkschichten eine besonders große wirtschaftliche Bedeutung. Auf der einen Seite fallen beispielsweise im Bereich der Automobilindustrie erhebliche Mengen an verzinktem Stahlschrott an, gleichzeitig verlangen die Stahl- und Gießereiindustrie nahezu oder vollständig entzinkte Schrotte zur Wiederverwertung. Des Weiteren handelt es sich bei Zink auch um ein wertvolles Metall, dessen Rückgewinnung erhebliches wirtschaftliches Potenzial bietet, darüber hinaus aber auch unter Gesichtspunkten des Umweltschutzes und der Schonung von Ressourcen wünschenswert ist.

Die Ablösung der Beschichtung kann insbesondere mithilfe einer sauren wässrigen Lösung erfolgen, wobei der Einsatz von Schwefelsäure bevorzugt ist. Möglich ist jedoch selbstverständlich auch der Einsatz eines Verfahrens, bei dem mit alkalisch-wässriger Lösung gearbeitet wird. Bei der zur Entfernung der Beschichtung verwendeten Flüssigkeit kann es sich jedoch auch um organische Lösungsmittel handeln, beispielsweise um Abbeizmittel zur Entfernung von Lackierungen o. ä.

Gemäß der Erfindung wird der Schrott während der Ablösung der Beschichtung mit der Flüssigkeit besprüht. Hierfür werden speziell ausgelegte Düsen verwendet, die insbesondere oberhalb des mit Schrott gefüllten Schwingförderers angeordnet sein können. Möglich ist jedoch auch das Besprühen des Schrotts von anderen Seiten, beispielsweise von unten. Strahlwinkel, Strahldruck, Flüssigkeitsvolumen etc. sollten so eingestellt sein, dass die Schrottteile von allen Seiten mit der Flüssigkeit in Kontakt kommen, so dass die Beschichtung von der gesamten Schrottoberfläche abgelöst wird. Die Besprühung der gesamten Oberfläche wird dadurch unterstützt, dass die Schrottteile während des Rüttelvorgangs ständig ihre Lage verändern, so dass letztlich die gesamte Oberfläche besprüht wird. Zusätzlich wird der Entzinkungsvorgang durch die Dynamik des Flüssigkeitsstrahls selbst unterstützt. Insbesondere bei der Ablösung einer Zinkschicht bilden sich Wasserstoffblasen auf der Oberfläche des zu entzinkenden Stahlschrotts, die normalerweise die weitere Ablösung von Zink behindern. Durch das Besprühen des Stahlschrotts lösen sich die Wasserstoffblasen schneller von der Oberfläche, so dass die weitere Ablösung der Beschichtung nicht behindert wird. Die Behinderung der Ablösung der Beschichtung durch Blasenbildung auf der Oberfläche ist auch als Leidenfrost-Effekt bekannt.

Bei der Besprühung des Schrotts mit der Flüssigkeit ist das Eintrittsende geschlossen und weist eine flüssigkeitsdichte Barriere auf, während das Austrittsende der Förderrinne offen ausgebildet ist. Der Schrott kann somit am Eintrittsende auf die Förderrinne aufgebracht werden und fällt selbständig von der Förderrinne herab, sobald er das Austrittsende erreicht hat. Die Geschwindigkeit der Förderung des Schrotts in Förderrichtung, die Menge an aufgebrachter Flüssigkeit, der Strahldruck, die Schwingfrequenz etc. müssen so aufeinander eingestellt sein, dass eine praktisch vollständige Ablösung der Beschichtung vom Schrott bis zum Erreichen des Austrittsendes erfolgt. Gleichzeitig sammelt sich auf dem Boden der Förderrinne Flüssigkeit, die zusätzlich Schrottstücke benetzt, insbesondere auch von der Unterseite. Diese zusätzliche Benetzung fördert die Ablösung der Beschichtung.

Die Flüssigkeit, mit der die Beschichtung vom Schrott abgelöst wird, sollte aufgefangen werden. Zum einen fließt die Flüssigkeit am Austrittsende der Förderrinne heraus, sofern dieses offen ist. Darüber hinaus wäre denkbar, auch im Boden der Förderrinne Durchlässe vorzusehen, durch die die Flüssigkeit in ein unterhalb der Förderrinne befindliches Auffanggefäß fließen kann. Die aufgefangene Flüssigkeit kann entsprechend weiterverarbeitet werden. Insbesondere bei Ablösung einer Zink- oder auch Zinnschicht kann das abgelöste Metall elektrolytisch zurückgewonnen werden.

Zusammen mit dem oben beschriebenen Verfahren der Besprühung des Schrottes kann auch ein Verfahren durchgeführt werden, bei dem der Schrott durch ein entsprechendes Tauchbad geführt wird. In diesem Fall taucht der Schrott während der Ablösung der Beschichtung in die Flüssigkeit ein. Die Förderrinne enthält somit eine bestimmte Flüssigkeitsmenge, durch welche die Schrottteile hindurchbewegt werden. Zu berücksichtigen ist in diesem Fall, dass die Schrottteile innerhalb einer Flüssigkeit gefördert werden, so dass sich die einzelnen Schrottteile bei einer Schwingung weniger weit bewegen als an der Luft. Entsprechend muss ggf. die Schwingungsfrequenz und/oder die Schwingungsamplitude angepasst werden. Die Transportgeschwindigkeit hängt u. a. von der Flüssigkeitsmenge und der Viskosität der Flüssigkeit ab. Auch wenn der Schrott durch ein Tauchbad geführt wird, führt die Schwingbewegung der Förderrinne zu einer Verstärkung der Relativbewegungen zwischen den einzelnen Schrottteilen und der Flüssigkeit. Die Unterdrückung der Bildung bzw. die schnelle Ablösung von Wasserstoffblasen an der Oberfläche des Schrotts fördert den Stofftransport zwischen Metalloberfläche und Flüssigkeit.

Die Flüssigkeit zur Ablösung der Beschichtung vom Schrott sollte kontrolliert ausgetauscht werden, beispielsweise durch Umpumpen. Es lässt sich beispielsweise kontinuierlich messen, wie hoch die Konzentration der vom Schrott abgelösten Metallionen ist, um stets gerade so viel der Flüssigkeit auszutauschen, dass sich die Metallionenkonzentration im gewünschten Bereich befindet. Die ausgetauschte Flüssigkeit wird dann in der Regel wiederaufbereitet, d. h. abgelöste Metallionen werden in metallischer Form zurückgewonnen, insbesondere durch Elektrolyse.

Im Falle einer Entzinkung mit Hilfe von Schwefelsäure ist auch eine Wiedergewinnung des Zinks als Zinksulfat möglich. Eine hoch mit Zinksulfat angereicherte Suspension kann beispielsweise der weiteren Verwendung in der Zinksulfatherstellung oder dem direkten Wiedereinsatz an elektrolytischen Verzinkungsanlagen zugeführt werden. Die Ausfällung des Zinksulfats ist durch Abkühlung der Mutterlauge auf 10 °C möglich.

Des Weiteren kann das nach Erreichen der maximalen Zinklöslichkeit in der umlaufenden Mutterlauge durch Konzentrationsfällung/Temperaturfällung auskristallisierte Zinksulfat durch eine Zentrifuge so von der Schwefelsäurelösung befreit werden, dass ein riesel-/schaufelfähiges Produkt von Zinksulfat Heptahydrat geringer Restfeuchte von vorzugsweise 3 - 5 % entsteht. Dies ist insofern bedeutsam, als Abnehmer von Zinksulfat in der dann vorliegenden Form wie Primärzinkhütten, Zinksulfathersteller oder auch Hersteller von Flockungsmitteln auf Zinkbasis insbesondere auf die Sulfatbilanz ihres Prozesses zu achten haben. Eine Einschleppung von Sulfat über anhaftende Schwefelsäure ist daher unerwünscht. Zur weiteren Verbesserung der Produktqualität und der Verringerung des Transportvolumens kann das Zinksulfat Heptahydrat auch an der Anlage zum Monohydrat kalziniert werden.

Der Schwingförderer ist so ausgebildet, dass der Boden der Förderrinne in Förderrichtung leicht ansteigt, vorzugsweise um ca. 3-5°. Auf diese Weise wird erreicht, dass sich die
Flüssigkeit im in Förderrichtung gesehen vorderen Teil des Schwingförderers, d. h. Richtung Eintrittsende, ansammelt. Wenn der Schrott nun in Förderrichtung bewegt wird, tritt er letztlich durch die Flüssigkeitsoberfläche nach oben heraus. Bei leicht ansteigendem Boden der Förderrinne muss somit das Austrittsende nicht geschlossen sein, vielmehr reicht es aus, am Eintrittsende eine flüssigkeitsdichte Barriere vorzusehen, während das Austrittsende offen ist. Die Richtung Austrittsende geförderten Schrottteile können dann einfach von der Förderrinne herabfallen; ein spezielles Herausheben mithilfe von Magneten o. ä. ist dann nicht erforderlich. Bei dieser Ausführungsform bewegen sich die Schrottteile somit zunächst durch die Flüssigkeit und im weiteren Verlauf durch die Umgebungsatmosphäre. Zusätzlich wird der Schrott in dem Bereich, in dem er sich nicht mehr innerhalb der Flüssigkeit befindet, mit der Flüssigkeit besprüht, wenn im in Förderrichtung gesehen hinteren Bereich der Förderrinne zusätzliche Düsen zur Besprühung angebracht sind.

Die Neigung der Förderrinne lässt sich vorteilhafterweise je nach Bedarf einstellen, so dass die Steigung des Bodens der Förderrinne in Förderrichtung variabel ist.

Im Anschluss an die Ablösung der Beschichtung können sich weitere Verfahrensschritte anschließen, insbesondere Spül- und Trocknungsschritte. Auf diese Weise wird der von seiner Beschichtung befreite Schrott von noch anhaftender Flüssigkeit befreit und anschließend ggf. getrocknet, so dass er einer Weiterverwertung in der Stahlerzeugung oder in Gießereien zugeführt werden kann. Auch die Spül- und Trocknungsschritte können in Schwingförderern durchgeführt werden, um die Bewegungen vorteilhaft auszunutzen. Bei Bedarf ist auch eine Vorbehandlung des Schrotts in Schwingförderern möglich, z. B. wenn der verzinkte Schrott zusätzlich mit organischen Beschichtungen versehen ist. In diesem Fall ist es sinnvoll, vor die Zinkablösung einen Schritt zur Ablösung der organischen Beschichtungen mit entsprechenden Abbeizmitteln o. ä. zu schalten.

Ein für das Verfahren geeigneter Schwingförderer kann z. B. je nach geforderter Transportleistung eine Förderrinne mit einer Länge von ca. 6 - 8 m haben.

Hinsichtlich des Antriebs des Schwingförderers werden unterschiedliche Techniken unterschieden, wie nämlich Unwuchtantriebe, Antriebe mittels Magnetvibratoren, Exzenterwellenantriebe, Erregerzellenantriebe, Getriebeerreger u. a..

Die Vorrichtung zur Durchführung des Verfahrens kann Mittel zur Einstellung der Temperatur aufweisen, so dass die Flüssigkeit optimal temperiert wird. Beispielsweise kann eine Schwefelsäurelösung zur Beschleunigung der Entzinkung von Stahlschrott auf 40°C - 60°C (ggf. auch darüber) temperiert werden, während im Falle einer basischen Entzinkung i. d. R. höhere Temperaturen von 85°C und mehr erforderlich sind, um das Entzinken in überschaubarer Zeit überhaupt zu ermöglichen. Bei der sauren Entzinkung kann die bei der Verdünnung von konzentrierter Schwefelsäure auf eine Nennkonzentration von 15 - 35 % entstehende Wärme zum Erreichen der gewünschten Prozesstemperatur eingesetzt werden. Das Verfahren kann weitgehend autotherm betrieben werden.

Je nach Produkteigenschaften des behandelten Schrotts sind die einzustellenden Zeiten zur Entfernung der Beschichtung unterschiedlich. Im Falle einer Entzinkung spielen beispielsweise die Art der Verzinkung (elektrolytisch, feuerverzinkt, galvannealed, stückverzinkt), die Dicke der applizierten Zinkschicht und auch die Art der der Entzinkung vorgeschalteten Schrottaufbereitung eine Rolle. Weitgehend unbehandelter Schrott wird eine längere Zeit zur vollständigen Entzinkung benötigen, während eine Zerkleinerung des Schrotts durch Schneiden, Schreddern etc. durch die Schaffung zusätzlicher Angriffsflächen für eine Beschleunigung sorgt. Darüber hinaus ist es für den Einsatz eines Schwingförderers vorteilhaft, wenn die einzelnen Schrottteile eine Größe aufweisen, die ein unproblematisches Fördern im Wege einer Schwingbewegung erlaubt.

Auch die Fördergeschwindigkeit kann je nach Bedarf eingestellt werden. Durch die Einstellung des Horizontalanteils der Schwingung kann beispielsweise die Fördergeschwindigkeit verringert werden, wenn dies zur Erreichung einer vollständigen Ablösung der Beschichtung erforderlich ist. Bei wenig zerkleinertem Schrott, der in Paketform angeliefert wird, ist z. B. mit deutlich längeren Behandlungszeiten zu rechnen. In diesem Fall kann die Horizontalfördergeschwindigkeit bis auf 0 geregelt werden, so dass der Schrott eine Zeit lang an einer Stelle gehalten und nicht zum Austrittsende weiterbefördert wird. Möglich ist sogar eine zeitweise Bewegung entgegengesetzt der Förderrichtung. Sobald das gewünschte Ergebnis hinsichtlich der Ablösung der Beschichtung erreicht ist, werden die Schrottteile sodann weiter Richtung Austrittsende befördert.

Umgekehrt kann die Schwingung auch so eingerichtet werden, dass die Förderrinne ausschließlich eine Bewegung in der Horizontalen ohne Vertikalanteil vollzieht, d. h. es ergibt sich lediglich eine Vorwärtsbewegung der Schrottteile. Der Bewegungsablauf der Förderrinne ist in diesem Fall der einer Schüttelrutsche.

Ein weiterer Vorteil der Behandlung des Schrotts innerhalb eines Schwingförderers besteht darin, dass sich während der Rüttelbewegung einzelne Schrottteile regelmäßig berühren und im Falle von scharfkantigen Teilen die Oberflächen gegenseitig verletzt werden. Derartige Verletzungen der Beschichtung vereinfachen die Ablösung, da es sich bei der Beschichtung häufig um eine Passivierungsschicht handelt. Relativbewegungen der Schrottstücke zueinander werden auch dadurch herbeigeführt, dass sich die Geschwindigkeit in Förderrichtung je nach Förderguthöhe unterscheidet. Die Relativbewegung resultiert aus der unterschiedlichen Dämpfung der Schwinganregung in Verbindung mit unterschiedlichen Reibvorgängen über die Schütthöhe. Mit wachsender Schütthöhe kommt es daher zu immer stärkeren Verschiebungen zwischen den Schichten, was sich im Abfall der mittleren Fördergeschwindigkeit bemerkbar macht.

Insbesondere bei flächigen Schrottstücken, z. B. Stanzabfall aus Neuschrott, kann es sinnvoll sein, eine Drehung der Schrottteile um seine Achse herbeizuführen, so dass sämtliche Seiten des Schrotts gleichmäßig von der Flüssigkeit benetzt werden. Um dies zu erreichen, können in den Boden der Förderrinne ein oder mehrere Stufen eingebaut sein, so dass insgesamt der Boden der Fördererrinne am Austrittsende ein tieferes Niveau aufweist als im Bereich des Eintrittsendes. Wenn ein bestimmtes Schrottstück über eine solche Stufe gefördert wird, fällt es von dieser Stufe herab, wobei es sich um seine eigene Achse dreht und anschließend mit einer anderen Seite auf dem Boden des Schwingförderers aufliegt als zuvor. Dies ist insbesondere von Bedeutung, wenn der Schrott mit Hilfe von oberhalb des Schwingförderers angeordneten Düsen besprüht wird, so dass auch bei flächigen Schrottteilen sämtliche Bereiche mit der Flüssigkeit in Kontakt kommen. Die Höhe der Stufen, d. h. die Fallhöhe kann je nach Größe der zu verarbeitenden Schrottteile unterschiedlich eingestellt sein. Gegebenenfalls kann der Schwingförderer auch Mittel zur Einstellung der Höhe der Stufen aufweisen. Im Falle von mehreren Stufen erfolgt gleich mehrfach eine Drehung der Schrottteile um die eigene Achse.

Eine weitere Möglichkeit, dafür zu sorgen, dass sich die Schrottteile um Ihre Achsen bewegen, besteht darin, innerhalb der Fördererrinne zusätzliche Hindernisse im Förderweg anzuordnen, an denen sich die Schrottstücke, vorangetrieben durch die Schwingungen, in einer bestimmten Richtung drehen. Erhebungen auf dem Boden der Förderrinne beispielsweise können dafür sorgen, dass sich ein Schrottteil in Förderrichtung aufrichtet und daraufhin auf seine Unterseite fällt. Anschließend werden weitere Seiten des Schrottteils für die Flüssigkeit zugänglich.

Die Förderrinne des Schwingförderers sollte so ausgekleidet sein, dass sie einerseits den mechanischen Belastungen durch die Schrottteile und zum anderen der Flüssigkeit wiedersteht. Im Falle der Verwendung einer sauren wässrigen Lösung beispielsweise muss die Förderrinne ausreichend säurefest sein. Geeignete Werkstoffe sind hochlegierte, verschleißfeste Stähle oder Nickelbasislegierungen. Diese erhöhen zudem das Elektrodenpotential im System Zink-Fördergut-Förderrinne und tragen so zu einer zusätzlichen Beschleunigung des Entzinkungsvorgangs bei.

Wie eingangs erwähnt, wurde herausgefunden, dass sich eine Entzinkung in saurer Lösung zusätzlich beschleunigen lässt, in dem die Schwefelsäurelösung mit Zinkionen vorbeladen wird. Die Konzentration an Zinkionen in der sauren Lösung beträgt vorzugsweise ca. 10 bis 100 g/l. Hier kann auch eine Zinklösung zum Einsatz gebracht werden, die aus der Primärzinkerzeugung einer Zinkhütte stammt. Durch den Entzinkungsprozess wird die Konzentration an Zinkionen weiter erhöht, so dass eine anschließend erfolgende Elektrolyse zur Gewinnung von Zink mit entsprechend höherer Ausbeute verbunden ist.

Vorteilhaft ist es darüber hinaus, eine Entzinkung in Gegenwart eines Öls, insbesondere eines Ziehöls oder eines Waschöls durchzuführen, da auf diese Weise die unerwünschte Eisenauflösung zusätzlich unterdrückt werden kann. Die Konzentration des Öls bei einer sauren Entzinkung sollte ca. 0,1 bis 3 Gew.-% bezogen auf den Stahlschrott betragen. Die Entzinkung selbst wird durch die Gegenwart des Öls praktisch nicht behindert. Im Anschluss an die eigentliche Entzinkung kann das Öl ggf. über eine Phasentrennung abgetrennt und erneut verwendet werden. Insbesondere bei Kristallisation von abzutrennendem Zinksulfat und zur Sicherung der Qualität des Produkts, das keine organischen Begleitstoffe enthalten sollte, ist der Ölgehalt niedrig zu halten, weshalb entsprechende Vorkehrungen getroffen werden sollten.

Die Erfindung wird anhand der beigefügten Figuren näher erläutert.

Es zeigen:
- Fig. 1:: Einen Schwingförderer in der Seitenansicht gemäß einer ersten, nicht patentgemäßen Ausführungsform;
- Fig. 2:: die Förderrinne des Schwingförders aus Figur 1 in einer Frontalansicht;
- Fig. 3.: einen Schwingförderer in der Seitenansicht gemäß einer zweiten Ausführungsform;
- Fig. 4:: die Förderrinne des Schwingförderers aus Figur 3 in der Frontalansicht und
- Fig. 5:: einen Schwingförderer in der Seitenansicht gemäß einer dritten Ausführungsform.

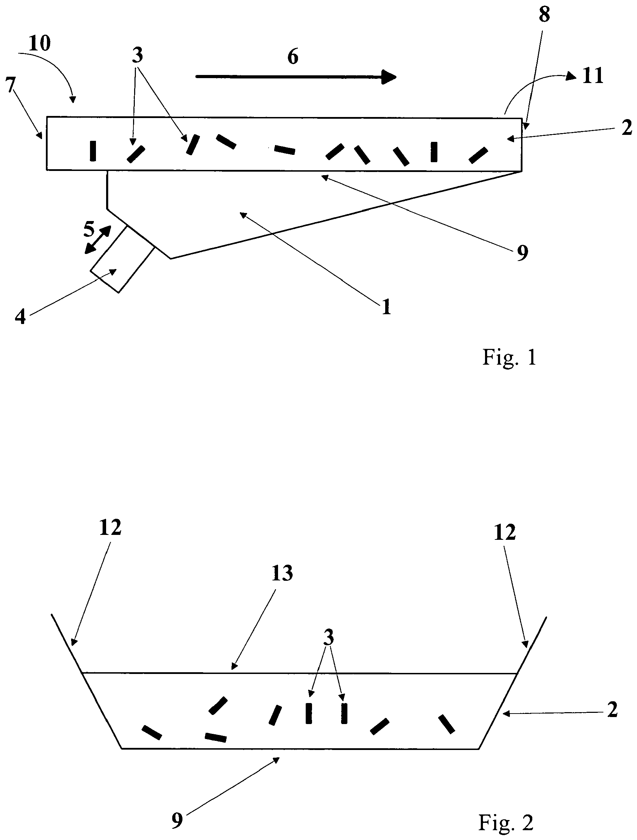

In Figur 1 wird die Durchführung des Verfahrens schematisch dargestellt. Der Schwingförderer 1 weist eine Förderrinne 2 auf, in der sich einzelne Schrottteile 3 befinden. Angetrieben wird der Schwingförderer 1 durch den Schwingantrieb 4, welcher eine Bewegung in Schwingrichtung 5 erzeugt, d. h. die Schrottteile 3 werden in der Zeichnung nach oben und nach rechts geschleudert, so dass sie nach jeder Schwingung um eine gewisse Distanz nach rechts versetzt wieder in der Förderrinne 2 aufkommen. Insgesamt ergibt sich somit eine Förderrichtung 6, die durch den entsprechenden Pfeil gekennzeichnet wird.

Die Förderrinne 2 weist ein Eintrittsende 7 und ein Austrittsende 8 auf. Die Schrotteinbringung wird mit dem Pfeil 10, die Schrottentnahme, beispielsweise mit Hilfe von Magneten, mit Hilfe des Pfeils 11 symbolisiert. Der Boden 9 der Förderrinne 2 ist eben ausgebildet. Gemäß dieser Ausführungsform befindet sich innerhalb der Förderrinne 2 ein Tauchbad aus der Flüssigkeit, die zur Entfernung der Beschichtung von den Schrottteilen 3 verwendet wird. Die Schrottteile 3 werden somit innerhalb der Flüssigkeit vom Eintrittsende 7 zum Austrittsende 8 gefördert. Dabei kommen sie mit der Flüssigkeit von allen Seiten in Kontakt, so dass eine quasi vollständige Entfernung der Beschichtung erfolgt. Um die Flüssigkeit innerhalb der Förderrinne 2 zu halten, weist diese sowohl am Eintrittsende 7 als auch am Austrittsende 8 jeweils eine flüssigkeitsdichte Barriere auf, so dass die Förderrinne 2 insgesamt die Form einer Wanne hat.

In Figur 2 wird die Förderrinne 2 aus Figur 1 in Frontalansicht dargestellt. Man erkennt die Seitenwände 12 sowie den eben ausgebildeten Boden 9. Die einzelnen Schrottteile 3 befinden sich allesamt unterhalb der Flüssigkeitsoberfläche 13.

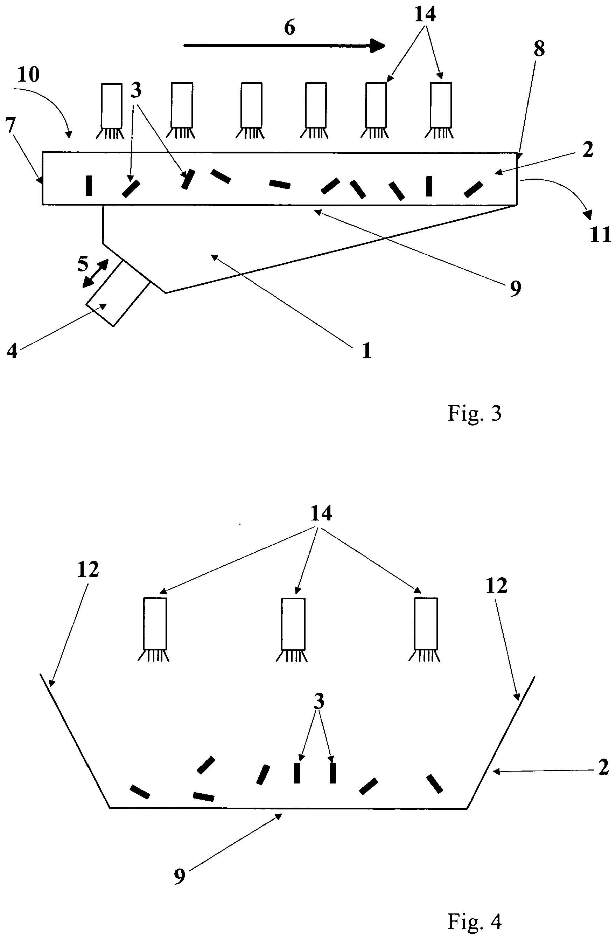

In Figur 3 ist eine Ausführungsform der Erfindung dargestellt, wobei hinsichtlich der Bewegung der Schrottteile 3 durch die Förderrinne 2 das zu den Figuren 1 und 2 Gesagte gilt. Die Schrottteile 3 werden von oben durch Düsen 14 mit der Flüssigkeit besprüht. Im Gegensatz zur hier gewählten Darstellung steigt der Boden 9 der Förderrinne 2 in Förderrichtung an. Das Austrittsende 8 ist offen. Entsprechend können die Schrottteile 3 am Austrittsende 8 gemäß dem Pfeil 11 einfach von der Förderrinne 2 herabfallen, um hinter der Förderrinne 2 aufgefangen zu werden. In Figur 4 ist diese alternative Ausführungsform in der Frontalansicht dargestellt.

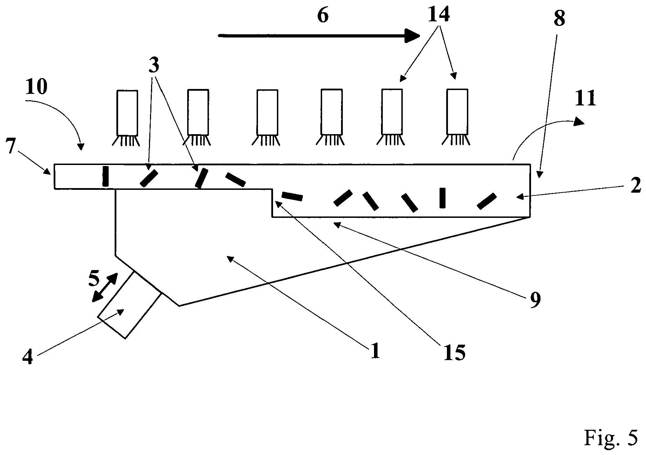

In Figur 5 schließlich wird eine weitere Ausführungsform dargestellt, die grundsätzlich der Ausführungsform gemäß Figur 3 entspricht. Im Gegensatz zu dieser ist jedoch eine Stufe 15 innerhalb des Bodens 9 vorgesehen. Die Schrottteile 3, die in Förderrichtung 6 über die Stufe 15 bewegt werden, fallen somit ein Stück herab, wobei sich eine Drehung der Schrottteile 3 um die eigene Achse ergibt. Auf diese Weise wird erreicht, dass auch die zunächst unten liegenden Seiten der Schrottteile 3 vom Sprühstrahl der Düsen 14 erfasst werden. Dies ist von besonderer Bedeutung bei flächig ausgebildeten Schrottteilen 3. Auch bei Figur 5 gilt, dass der Boden 9 der Förderrinne 2 im Gegensatz zur Abbildung in Förderrichtung ansteigt.

## Patentansprüche

1. Verfahren zum Ablösen von Beschichtungen von Schrotten (3), wobei der Schrott (3) beim Ablösen der Beschichtung in einer Förderrinne (2) eines Schwingförderers (1) entlang einer Förderrichtung (6) vom Eintrittsende (7) zum Austrittsende (8) der Förderrinne (2) bewegt wird,
**dadurch gekennzeichnet, dass** der Schrott (3) mit einer Flüssigkeit zur Ablösung der Beschichtung in Kontakt gebracht wird und der Schrott (3) während der Ablösung der Beschichtung mit der Flüssigkeit besprüht wird, der Boden der Förderrinne (2) in Förderrichtung ansteigt, das Eintrittsende (7) eine flüssigkeitsdichte Barriere aufweist und das Austrittsende (8) offen ist.

2. Verfahren nach Anspruch 1, **dadurch gekennzeichnet, dass** der Boden der Förderrinne (2) in Förderrichtung um 3° bis 5° ansteigt.

3. Verfahren nach Anspruch 1 oder 2, **dadurch gekennzeichnet, dass** die Steigung des Bodens der Förderrinne (2) variabel ist.

4. Verfahren nach einem der Ansprüche 1 bis 3, **dadurch gekennzeichnet, dass** der Schrott (3) Stahlschrott ist.

5. Verfahren nach einem der Ansprüche 1 bis 4, **dadurch gekennzeichnet, dass** der Schrott (3) verzinkter Schrott ist und die Zinkschicht abgelöst wird.

6. Verfahren nach einem der Ansprüche 1 bis 5, **dadurch gekennzeichnet, dass** die Flüssigkeit eine saure wässrige Lösung ist.

7. Verfahren nach Anspruch 6, **dadurch gekennzeichnet, dass** die saure wässrige Lösung eine Schwefelsäurelösung ist.

8. Verfahren nach einem der Ansprüche 1 bis 5, **dadurch gekennzeichnet, dass** die Flüssigkeit eine alkalische wässrige Lösung ist.

9. Verfahren nach einem der Ansprüche 1 bis 8, **dadurch gekennzeichnet, dass** der Boden der Förderrinne (2) ein oder mehrere Stufen (15) aufweist, so dass der Boden (9) im Bereich des Austrittsendes (8) ein tieferes Niveau aufweist als im Bereich des Eintrittsendes (7).

10. Verfahren nach einem der Ansprüche 1 bis 9, **dadurch gekennzeichnet, dass** der Boden (9) der Förderrinne (2) Erhebungen aufweist.

## Claims

1. Method for the removal of coatings from scrap materials (3), wherein the scrap (3), while the coating removal process is performed, moves within a conveying trough (2) of a vibrating conveyor (1) in a direction (6) from the inlet end (7) towards the outlet end (8) of said conveying trough (2) **characterized in that** the scrap (3) is brought into contact with a liquid for removal of the coating and that the scrap (3) is spray-treated with the liquid during the coating removal process, wherein the bottom of the conveying trough (2) slopes upward, the inlet end (7) is provided with a liquid-tight barrier and the outlet end (8) is open.

2. Method according to claim 1, **characterized in that** the bottom of the conveying trough (2) slopes upward by 3 to 5 degrees in the conveying direction.

3. Method according to claim 1 or 2, **characterized in that** the ascending slope of the bottom of the conveying trough (2) is variable.

4. Method according to any of claims 1 to 3, **characterized in that** the scrap material (3) is steel scrap.

5. Method according to any of claims 1 to 4, **characterized in that** the scrap material (3) is zinc-coated scrap and the zinc layer is removed.

6. Method according to any of claims 1 to 5, **characterized in that** the liquid is an acidic aqueous solution.

7. Method according to claim 6, **characterized in that** the acidic aqueous solution is a sulfuric acid solution.

8. Method according to any of claims 1 to 5, **characterized in that** the liquid is an alkaline aqueous solution.

9. Method according to any of claims 1 to 8, **characterized in that** the bottom of the conveying trough (2) comprises one or several steps (15) so that the level of the bottom (9) is lower in the area of the outlet end (8) than in the area of the inlet end (7).

10. Method according to any of claims 1 to 9, **characterized in that** the bottom (9) of the conveying trough (2) is provided with raised or elevated portions.

## Revendications

1. Procédé permettant de détacher des revêtements de débris (3), dans lequel on déplace les débris (3) lors du détachement du revêtement dans une rigole de transport (2) d'un transporteur oscillant (1) le long d'une direction de transport (6) depuis l'extrémité d'entrée (7) jusqu'à l'extrémité de sortie (8) de la rigole de transport (2), **caractérisé en ce que** l'on met les débris (3) en contact avec un liquide permettant de détacher le revêtement et on arrose les débris (3) avec le liquide pendant le détachement du revêtement, le fond de la rigole de transport (2) s'élève dans la direction de transport, l'extrémité d'entrée (7) présente une barrière étanche au liquide et l'extrémité de sortie (8) est ouverte.

2. Procédé selon la revendication 1, **caractérisé en ce que** le fond de la rigole de transport (2) s'élève de 3° à 5° dans la direction de transport.

3. Procédé selon la revendication 1 ou 2, **caractérisé en ce que** la pente du fond de la rigole de transport (2) est variable.

4. Procédé selon l'une quelconque des revendications 1 à 3, **caractérisé en ce que** les débris (3) sont des ferrailles d'acier.

5. Procédé selon l'une quelconque des revendications 1 à 4, **caractérisé en ce que** les débris (3) sont des débris galvanisés et on détache la couche de zinc.

6. Procédé selon l'une quelconque des revendications 1 à 5, **caractérisé en ce que** le liquide est une solution aqueuse acide.

7. Procédé selon la revendication 6, **caractérisé en ce que** la solution aqueuse acide est une solution d'acide sulfurique.

8. Procédé selon l'une quelconque des revendications 1 à 5, **caractérisé en ce que** le liquide est une solution aqueuse alcaline.

9. Procédé selon l'une quelconque des revendications 1 à 8, **caractérisé en ce que** le fond de la rigole de transport (2) présente un ou plusieurs degré (s) (15), de telle manière que le fond (9) présente un niveau plus profond dans la région de l'extrémité de sortie (8) que dans la région de l'extrémité d'entrée (7).

10. Procédé selon l'une quelconque des revendications 1 à 9, **caractérisé en ce que** le fond (9) de la rigole de transport (2) présente des surélévations.
